# FASCICULE DE BREVET EUROPEEN

(11) **EP 3 007 791 B1**
(45) Date de publication et mention de la délivrance du brevet: **14.10.2020**
(21) Numéro de dépôt: 14811122.2
(22) Date de dépôt: 19.05.2014
(51) Int. Cl.: B01D 3/00

(54) **PLATEAU DISTRIBUTEUR POUR COLONNE DE CONTACT GAZ/LIQUIDE AVEC SYSTEME DE DISTRIBUTION SECONDAIRE**
VERTEILERPLATTE FÜR EINE GAS-/FLÜSSIGKEITS-KONTAKTSÄULE MIT EINEM SEKUNDÄREN VERTEILUNGSSYSTEM
DISTRIBUTION PLATE FOR GAS/LIQUID CONTACT COLUME WITH SECONDARY DISTRIBUTION SYSTEM

(30) Priorité: 10.06.2013 FR 1355307
(43) Date de publication de la demande: 20.04.2016
(73) Titulaire: IFP Energies nouvelles, 92500 Rueil-Malmaison (FR)
(72) Inventeur: HAROUN, Yacine, F-69520 Grigny (FR); ROYON-LEBEAUD, Aude, F-69007 Lyon (FR); PLAIS, Cecile, F-69420 Les Haies (FR)
(74) Mandataire: IFP Energies nouvelles
(86) Numéro de dépôt international: PCT/FR2014/051151
(87) Numéro de publication internationale: WO 2014/199035

(56) Documents cités:
- US-A- 3 524 731
- US-A- 4 689 183
- US-A- 4 808 350
- US-A1- 2001 038 155
- US-A1- 2008 053 814
- US-A1- 2010 244 290
- US-A1- 2011 303 089

## Description

La présente invention concerne le domaine des colonnes de contact gaz/liquide, et plus particulièrement pour les unités de traitement de gaz, de captage du CO₂, ou encore de distillation.

Les unités de traitement de gaz et/ou de captage du CO₂ par lavage aux amines et/ou de distillation comprennent des colonnes d'échange de matière et/ou de chaleur entre un gaz et un liquide, il peut s'agir par exemple de colonne d'absorption et de régénération de fluides, liquide ou gazeux. Ces colonnes fonctionnent en écoulement gaz/liquide à contre courant ou à co-courant.

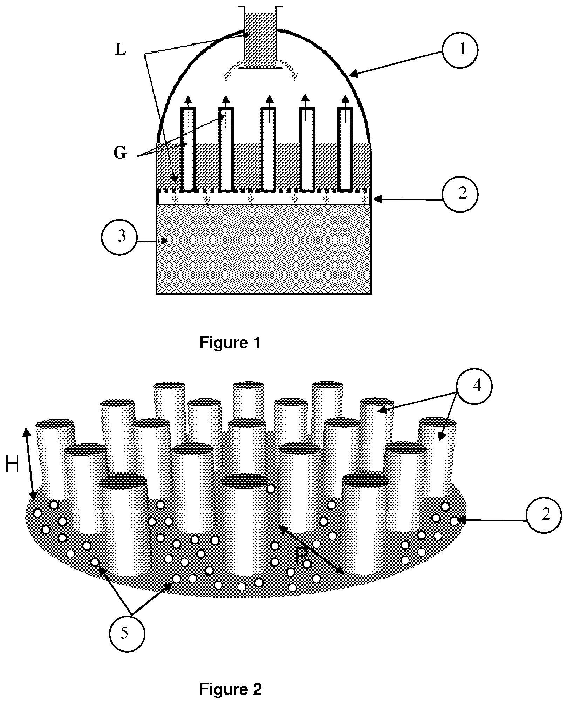

Les colonnes utilisées dans ces unités de traitement de gaz et/ou de captage de CO₂ et/ou de distillation et/ou de déshydratation fonctionnent généralement sur le principe d'un échange de matière et/ou de chaleur entre le gaz et le fluide qui circulent dans les colonnes. La figure 1 représente un cas particulier d'une tête de colonne de traitement de gaz (1) équipée d'un plateau distributeur. Classiquement, cette colonne de traitement de gaz (1) comporte plusieurs sections (3) remplies par un contacteur, un plateau distributeur (2) est disposé au-dessus de chaque section (3). Le contacteur gaz/liquide met en contact le gaz (G) et le liquide (L) afin de permettre les échanges.

Par exemple, des distributeurs standards (2) utilisés dans les colonnes d'absorption/régénération ou encore de distillation sont généralement constitués d'un plateau collecteur/distributeur équipé de cheminées (4) ou caissons pour le passage du gaz (cf. figure 2). La distribution du liquide se fait par le passage du liquide dans des orifices (5) positionnés sur le bas du plateau (2) et la distribution du gaz se fait par les caissons (4). Chaque caisson (4) permet le passage du gaz, selon le mode de fonctionnement contre-courant ou co-courant, de la partie basse de la colonne vers la partie haute de la colonne (1) ou bien de la partie haute vers la partie basse. Les caissons (4) sont en saillie d'un côté du plateau (2) et sont perpendiculaires à celui-ci. Chaque caisson (4) est formé de plusieurs parois, par exemple parallélépipédiques ou cylindriques qui délimitent un volume interne qui est ouvert de part et d'autre du plateau (2). Pour éviter que le liquide ne passe dans les caissons (4), l'ouverture d'échappement ou d'arrivée du gaz au dessus du plateau (selon le mode de fonctionnement à contre-courant ou à co-courant), est préférentiellement recouverte par un chapeau (appelé également biseau). L'objectif du plateau distributeur est de distribuer le liquide (L) de manière homogène sur le contacteur gaz/liquide (3).

Afin d'optimiser les échanges entre le gaz et le liquide, de nombreux plateaux distributeurs ont été conçus. Ces plateaux distributeurs/collecteurs s'organisent principalement en deux grandes familles :
- systèmes distributeur/collecteur avec des cheminées, tels que décrits dans les demandes de brevet GB1169878A, US4808350A, US4472325A, US4427605A, US4839108A, FR2203659. Pour ce type de systèmes avec cheminées, la distribution du liquide se fait via des orifices situés sur le plateau ou via des cheminées de passage de liquide équipées d'orifices ou de fentes (cf. exemple de la figure 2), la distribution du gaz se fait par des cheminées de passage du gaz ou des caissons. La distribution du liquide par orifices réalisés sur le plateau ou au moyen de cheminées pour le passage du liquide ne permet pas d'obtenir une répartition homogène du liquide sur le contacteur, sans un nombre élevé d'orifices ou de cheminées, ce qui rend le plateau complexe, lourd (nombre important de cheminées de passage du liquide).
- systèmes avec des caissons distributeurs alimentés par une alimentation dédiée (système de collecte en amont ou alimentation intermédiaire) tels que décrits dans les demandes de brevets US4909967, US4816191, US4981265, DE2752391, WO8802647, FR2569129 ou distributeur/collecteur avec des caissons pour le passage du gaz tels que décrits dans les demandes de brevet US4689183, US5132055, US4432913. Ces types de distributeurs ont le plus souvent des systèmes de distribution du liquide situés sur les caissons de passage du gaz.

Toutefois les systèmes de distribution du liquide nécessitant une alimentation dédiée sont souvent très encombrant en raison de la mise en place d'un collecteur en amont de ces distributeurs. De plus, ces systèmes de distribution du liquide ne permettent pas une distribution homogène du liquide sur le contacteur. Par ailleurs, la forme de certains caissons de gaz engendre des pertes de charge importantes, qui limitent l'efficacité de la colonne

Le plus souvent, les systèmes décrits dans l'art antérieur ne permettent pas d'avoir une flexibilité suffisante du plateau distributeur. On définit la flexibilité d'un plateau distributeur, par sa capacité à garantir une bonne distribution du liquide aussi bien pour des faibles débits d'écoulement de fluides (liquide ou gaz) que pour des débits d'écoulement de fluides plus importants. Un plateau distributeur présentant une flexibilité importante permet son utilisation en faisant varier les conditions opératoires (notamment les débits) des échanges de matière et/ou de chaleur entre les fluides, dans le but d'améliorer l'efficacité des échanges, ou de s'adapter aux fluides mis en œuvre. En effet, ces conditions opératoires peuvent être très variables : par exemple le taux d'arrosage liquide (débit liquide ramené à la surface de la colonne) peut varier de 5 à 120 m³/m²/h, les facteurs cinétiques gaz (racine de l'inertie gaz construite sur la vitesse superficielle gaz) peuvent varier de 0.5 à 4 Pa^{1/2} et le ratio entre le débit nominal et le débit de turndown (débit minimal d'opération de la colonne) varie entre 1 et 5-6. Par ailleurs, on rappelle que les colonnes peuvent atteindre des diamètres de 1 à 10 m.

Pour assurer une répartition homogène du liquide, des distributeurs sous la forme d'arroseur (US4776989) ont été développés. Toutefois, ce type de distributeur présente une flexibilité limitée et nécessite d'être associé à un dispositif de collecte pour être utilisé en inter-lit.

Les documents US 2011/303089 A1, US 3 524 731 A, US 2001/038155 A1 et US 4 689 183 A décrivent également des plateaux distributeurs de l'art antérieur.

L'invention concerne un plateau distributeur de colonne d'échange de chaleur et/ou de matière entre un gaz et un liquide, comprenant des caissons pour le passage du gaz, des moyens de passage du liquide et un système de distribution secondaire. Le système de distribution secondaire permet de collecter le liquide et de le répartir de manière plus homogène sur le contacteur. Ainsi, le plateau distributeur selon l'invention permet d'obtenir de façon mois complexe une bonne répartition du liquide, de limiter les pertes de charge et d'avoir une bonne flexibilité du plateau.

### Le dispositif selon l'invention

L'invention concerne un plateau distributeur pour colonne d'échange de chaleur et/ou de matière entre un gaz et un liquide selon la revendication 1.

Avantageusement, ledit caisson perforé comprend plusieurs perforations.

Chaque caisson perforé a sensiblement une forme de rigole.

De manière avantageuse, ledit caisson perforé a une section transversale et une section longitudinale de forme respective sensiblement trapézoïdale ou rectangulaire, le côté le plus long desdites sections étant situé du côté du plateau.

Selon un mode de réalisation de l'invention, ledit caisson perforé comporte des tubes pour le passage du liquide.

Au moins une partie desdits tubes peut être en saillie à l'intérieur dudit caisson perforé.

En outre, au moins une partie desdits tubes peut être en saillie à l'extérieur dudit caisson perforé.

De plus, au moins une partie desdits tubes en saillie à l'extérieur dudit caisson perforé peut être inclinée.

En variante, au moins une partie desdits tubes en saillie à l'extérieur dudit caisson perforé possède une extrémité biseautée.

Selon l'invention, ledit système de distribution comporte plusieurs caissons perforés disposés en vis-à-vis de zones ne comprenant pas ledit caisson pour le passage du gaz.

Avantageusement, ledit caisson pour le passage du gaz est sensiblement parallélépipédique.

De préférence, ledit plateau comporte plusieurs caissons pour le passage du gaz, lesdits caissons pour le passage du gaz étant parallèles entre eux.

Selon un mode de réalisation de l'invention, ledit moyen pour le passage du liquide comprend au moins une cheminée en saillie sur ladite partie supérieure dudit plateau, ladite cheminée comportant au moins un orifice radial pour l'entrée du liquide et une ouverture pour déverser ledit liquide sur ledit moyen de distribution.

De manière avantageuse, ladite cheminée comporte au moins deux orifices radiaux disposés à des hauteurs différentes par rapport à la surface supérieure dudit plateau.

Alternativement, ledit moyen pour le passage dudit liquide comprend un orifice latéral dans ledit caisson pour le passage du gaz et un moyen d'écoulement du liquide permettant au liquide de s'écouler depuis ledit caisson pour le passage du gaz vers ledit système de distribution secondaire.

En outre, l'invention concerne une colonne d'échange de chaleur et/ou de matière entre un gaz et un liquide, dans laquelle les deux fluides sont mis en contact au moyen d'un contacteur. Ladite colonne comporte au moins un plateau distributeur selon l'invention pour permettre la distribution des fluides sur ledit contacteur.

Selon l'invention, ladite colonne comporte en outre au moins un répartiteur disposé au dessus d'un plateau distributeur pour la répartition du liquide sur le plateau distributeur, ledit répartiteur étant perforé pour le passage dudit liquide et comprenant au moins une perforation surélevée pour le passage dudit fluide.

L'invention concerne également l'utilisation d'une colonne selon l'invention pour un procédé de traitement de gaz, de captage de CO₂, de distillation ou de transformation d'air.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre le cas particulier d'une tête de colonne de traitement de gaz ou de capture de CO₂ équipée d'un plateau distributeur.
La figure 2, déjà décrite, illustre un plateau distributeur selon l'art antérieur.
La figure 3 illustre un plateau distributeur selon un premier mode de réalisation de l'invention.
La figure 4 illustre un plateau distributeur selon une variante du premier mode de réalisation de l'invention.
La figure 5 est une vue de dessous du plateau distributeur de la figure 4.
La figure 6 représente une cheminée de liquide pour le premier mode de réalisation.
Les figures 7a) à 7e) illustrent différentes variantes du système de distribution secondaire du plateau selon l'invention.
Les figures 8a) et 8b) représentent une vue de dessus d'un plateau selon l'invention au-dessus duquel est positionné un répartiteur selon l'invention.
La figure 9 représente un mode de réalisation d'un répartiteur selon l'invention.
Les figures 10 illustrent un plateau distributeur selon un deuxième mode de réalisation de l'invention.

### Description détaillée de l'invention

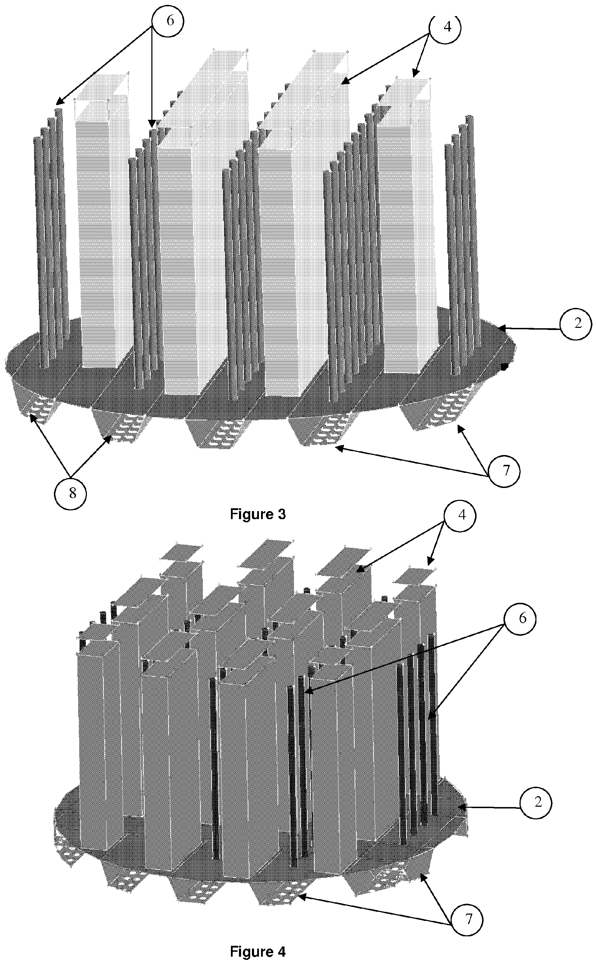

Les figures 3 et 4 illustrent un premier mode de réalisation d'un plateau distributeur selon l'invention.

L'invention concerne un plateau distributeur (2) pour colonne (1) d'échange de chaleur et/ou de matière entre un gaz (G) et un liquide (L), comprenant classiquement au moins un caisson (4) pour le passage de gaz à travers le plateau, au moins un moyen pour le passage du liquide, telle qu'une cheminée (6), à travers le plateau (2) et au moins un système de distribution secondaire (7). Le plateau distributeur (2) permet de former une garde de liquide sur sa surface supérieure. Le caisson (4) et la cheminée (5) sont en saillie sur la partie supérieure du plateau (2) (orientés vers le haut de la colonne), alors que le système de distribution secondaire (7) est en saillie sur la partie inférieure du plateau (2) (orienté vers le bas de la colonne). Le système de distribution (7) est appelé secondaire par rapport au moyen pour le passage du liquide qui est considéré comme le système de distribution principal (ou primaire).

Le caisson (4) pour le passage du gaz permet, pour une colonne fonctionnant à contre-courant, le passage du gaz du dessous vers le dessus du plateau. Avantageusement, le caisson pour le passage du gaz (4) a une forme sensiblement parallélépipédique, de manière à offrir une large ouverture au passage du gaz pour limiter les pertes de charge. De plus, lorsque le plateau distributeur (2) comporte plusieurs caissons (4) pour le passage du gaz, ceux-ci peuvent être disposés parallèlement les uns par rapport aux autres. Selon la variante de réalisation de la figure 3, les caissons (4) pour le passage du gaz, au nombre de quatre, sont de tailles variables et délimitent uniquement des espacements parallèles entre eux sur le plateau. Selon la variante de réalisation de la figure 4, les caissons (4) pour le passage du gaz, au nombre de douze, sont sensiblement de tailles identiques et délimitent des espacements parallèles et orthogonaux entre eux sur le plateau. Ces exemples ne sont pas exhaustifs des possibilités d'implémentation des caissons (4) pour le passage du gaz. Les caissons (4) pour le passage du gaz sont de préférence recouverts d'un chapeau (appelés également biseau) pour empêcher que le liquide pénètre dans ces derniers.

Le moyen pour le passage du liquide permet le passage du liquide du dessus du plateau vers le dessous. Selon le mode de réalisation des figures 3 et 4, les moyens pour le passage du liquide à travers le plateau sont composés d'un ensemble de cheminées (6). Ces cheminées (6), sensiblement de forme tubulaire, sont disposées entre les caissons (4) pour le passage du gaz. Le nombre de cheminées (6) est avantageusement supérieur au nombre de caissons (4) pour le passage du gaz. Le pas des cheminées (6) pour le passage du liquide peut avoir un pas triangulaire ou carré.

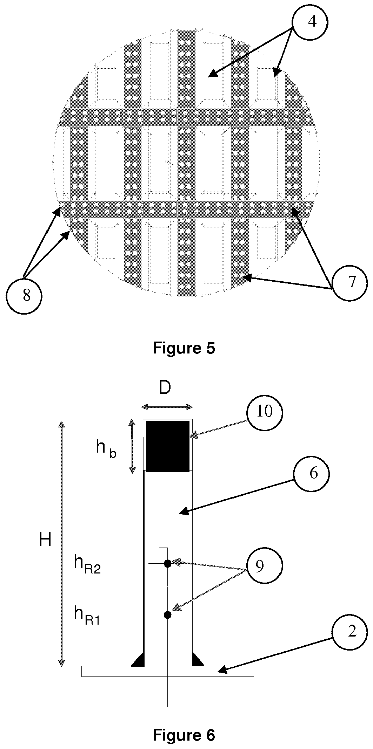

La figure 6 est un exemple de cheminée (6) pouvant être utilisée pour ce mode de réalisation. La cheminée (6) est d'une hauteur H inférieure à la hauteur des caissons (4) pour le passage du gaz (par exemple une cheminée (6) peut avoir une hauteur de 600 mm et un caisson (4) une hauteur de 700 mm). Pour éviter que du liquide pénètre dans les caissons (4) pour le passage du gaz lorsque la hauteur de garde de liquide est importante, la cheminée possède une ouverture (10). De plus, la cheminée (6) possède un chapeau (ou biseau) pour éviter l'entrée du liquide directement dans la cheminée (6). La cheminée (6) comporte au moins un, de préférence et tel que représenté deux, orifice(s) (9) radiaux pour l'entrée du liquide dans la cheminée, le liquide étant acheminé par gravité en dessous du plateau. De préférence, lorsque la cheminée (6) comporte au moins deux orifices (9) radiaux, ceux-ci sont situés à des hauteurs différentes : h_{R1} et h_{R2}. Ainsi, lorsque le débit de liquide est faible, la hauteur de garde du liquide sur le plateau (hauteur du liquide par rapport au niveau du plateau) est faible, seul le premier orifice radial permet au liquide de traverser le plateau. Lorsque le débit de liquide est plus élevé, la hauteur de garde du liquide augmente et les premier et deuxième orifices radiaux permettent au liquide de traverser le plateau. Grâce à cette caractéristique, le plateau distributeur est adapté à différents débits, il est donc flexible.

En outre, le plateau distributeur selon l'invention comprend au moins un système de distribution secondaire (7) en saillie sur la partie inférieure du plateau. Le système de distribution secondaire (7) permet de distribuer le liquide provenant du moyen du passage du liquide à travers le plateau sur un contacteur (3) disposé en dessous du plateau (2) de manière équitablement répartie. Selon un mode de réalisation de l'invention, le système de distribution secondaire est formé d'au moins un caisson (7) perforé, situé en dessous du plateau (2). Le caisson perforé (7) permet de collecter le liquide provenant du moyen de passage du liquide à travers le plateau, les perforations (8) de ce caisson (7) assurant la répartition homogène du liquide. Par exemple, deux rangées de perforations (8) sont réalisées dans chaque caisson perforé (7). Les caissons perforés (7) sont disposés en vis-à-vis des moyens pour le passage du liquide à travers le plateau (2), en vis-à-vis des cheminées (6) selon le mode de réalisations des figures 3 et 4, et ne sont pas en vis-à-vis des caissons (4) pour le passage du gaz, notamment pour laisser libre le passage du gaz. La figure 5 illustre une vue de dessous d'un plateau distributeur selon l'invention, on observe cette alternance des caissons perforés (7) et des caissons (4) pour le passage du gaz. Les perforations (8) permettent d'augmenter la densité de points d'injection du distributeur et ainsi d'améliorer la qualité de distribution. Une plus grande surface du lit de garnissage située en dessous du distributeur est ainsi arrosée avec ce système de distribution par rapport à un système conventionnel. Ce concept permet également de réduire la complexité de réalisation en réduisant le nombre de cheminées présents sur le plateau distributeur, ce qui permet également une réduction de l'encombrement et du poids du plateau distributeur.

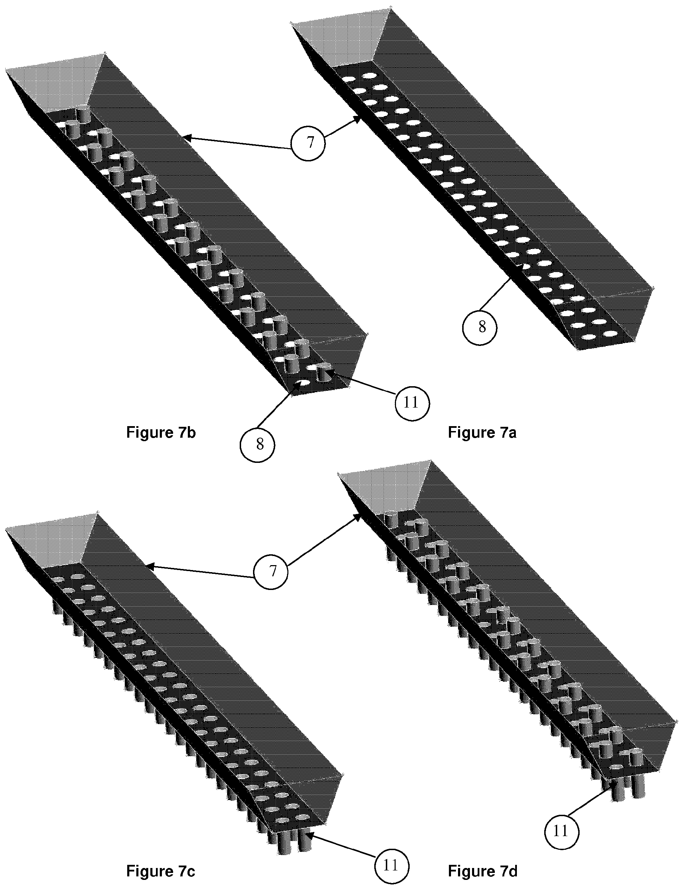

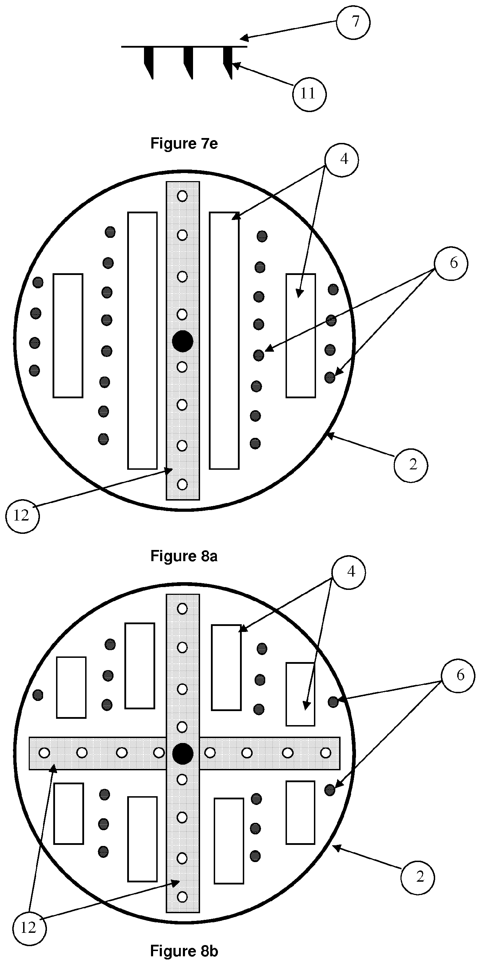

Avantageusement, pour assurer cette collecte, le caisson perforé (7) a sensiblement une forme de rigole. De préférence, tel que représenté sur les figures 7, cette rigole a une section transversale sensiblement trapézoïdale ou rectangulaire, dont le plus grand côté est situé vers le haut, du côté du plateau (2). De plus, la rigole possède une section longitudinale sensiblement trapézoïdale ou rectangulaire, dont le plus grand côté est situé vers le haut, du côté du plateau (2). La forme trapézoïdale de la rigole de distribution permet d'éviter l'entrainement liquide dans les caissons (4) de passage du gaz en minimisant localement l'accélération du gaz.

Les figures 7a) à 7e) représentent différentes variantes de réalisation des caissons perforés (7).

Selon la réalisation de la figure 7a), le caisson perforé (7) comprend uniquement des perforations (8).

Selon les réalisations des figures 7b) à 7d), le caisson (7) comprend, en plus des perforations (8), des tubes (11).

Selon la réalisation de la figure 7b), le caisson perforé (7) comprend à la fois des perforations (8) et des tubes (11), les tubes (11) étant en saillie à l'intérieur du caisson perforé (7) afin d'adapter la porosité du caisson perforé (7) au débit opéré. On appelle intérieur du caisson perforé (7), l'espace délimité par le caisson perforé (7) et le plateau (2). Lorsque le débit de liquide est faible, la hauteur de garde du liquide dans le caisson perforé (7) (hauteur du liquide par rapport au niveau du fond du caisson) est faible, seules les perforations (8) permettent au liquide de traverser le caisson. Lorsque le débit de liquide est plus élevé, la hauteur de garde du liquide augmente et à la fois les perforations (8) et les tubes (11) permettent au liquide de traverser le caisson perforé (7). Ce dispositif permet ainsi de conserver une excellente distribution sur l'ensemble de la plage de débit opérée et grâce à cette caractéristique, le plateau distributeur est adapté à différents débits, il est donc flexible.

Selon la réalisation de la figure 7c), le caisson perforé (7) comporte des tubes (11) en saillie à l'extérieur du caisson perforé (7). On appelle extérieur du caisson perforé (7), l'espace situé en dessous du caisson perforé (7). Les tubes permettent d'orienter le flux du liquide. Pour cette orientation, les tubes en saillie peuvent être inclinés, de manière à diriger le fluide sur la totalité du contacteur (3). De plus, les tubes (11) extérieurs permettent de d'éviter encore plus fortement l'entrainement liquide en décalant la sortie liquide par rapport à la zone d'accélération du gaz.

Le mode de réalisation de la figure 7d), combine les modes de réalisation des figures 7b) et 7c), avec des tubes (11) en saillie à l'extérieur et également pour certains à l'intérieur du caisson perforé (7).

Tel que représenté en figure 7e) les tubes (11) en saillie à l'extérieur du caisson perforé (7) peuvent être biseautés pour améliorer la qualité du jet sortant des tubes de distribution (11).

L'utilisation de tels tubes (11), en saillie à l'intérieur et/ou à l'extérieur, biseautés ou non, peut occuper seulement une partie ou la totalité des perforations (8) du caisson (7). Pour une flexibilité plus importante, on peut utiliser des tubes (11) en saillie à l'intérieur de différentes hauteurs.

L'invention concerne également une colonne (1) d'échange de matière et/ou de chaleur entre deux fluides, dans laquelle deux fluides sont mis en contact au moyen d'un contacteur gaz/liquide (3), la colonne (1) comprenant au moins une première entrée d'un fluide liquide, au moins une deuxième entrée d'un fluide gazeux, au moins une première sortie d'un fluide gazeux et au moins une deuxième sortie d'un fluide liquide. La colonne (1) comporte en outre un plateau distributeur (2) tel que décrit ci-dessus, pour permettre la distribution des fluides sur le contacteur (3).

De manière avantageuse, le contacteur gaz/liquide (3) est un lit de garnissage structuré ou vrac.

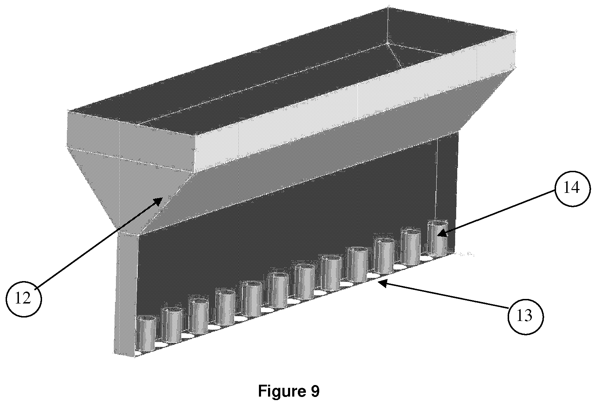

Dans le cas particulier où le distributeur est positionné en tête de colonne (1), un répartiteur (12) est mis en place au dessus du plateau distributeur (2) (figures 8a) et 8b)). L'objectif du répartiteur (12) est d'une part de casser l'inertie du jet arrivant de la conduite d'alimentation en entrée de colonne et d'autre par de bien répartir le liquide dans l'espace de collecte du plateau distributeur (2). Le répartiteur (12) est composé d'un déversoir et d'un espace de collecte et de distribution. Le répartiteur (12) est équipé d'une rangée de trous (13) par lesquels le liquide est réparti sur le plateau distributeur (figure 9). Selon une variante de réalisation de l'invention, certains trous (14) sont surélevés afin d'adapter la porosité du répartiteur au débit opéré. Ce concept est particulièrement adapté pour les colonnes fonctionnant avec une large plage de variation de débit liquide (ratio élevé entre le débit opératoire minimum et maximum). Le dispositif proposé permet ainsi de conserver une bonne répartition du liquide sur le plateau distributeur (2) pour une large plage de débit liquide.

La colonne selon l'invention peut être utilisée dans des procédés de traitement de gaz, de captage de CO₂, de distillation ou de transformation de l'air.

### Variante de réalisation

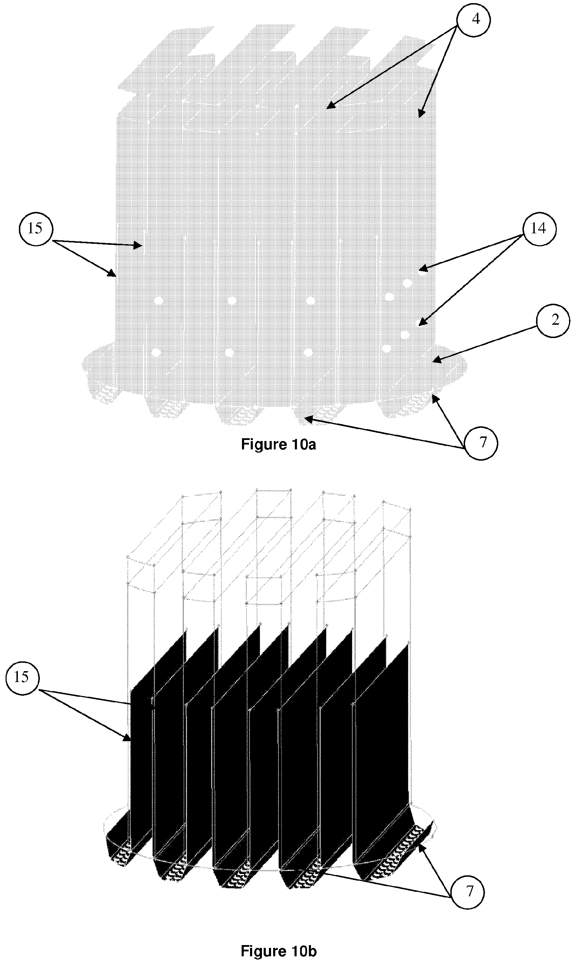

Selon, une deuxième mode de réalisation de l'invention illustré sur les figures 10a) et 10b), le moyen de passage du liquide à travers le plateau (2) est formé par des orifices latéraux (14) sur le caisson (4) de passage du gaz et d'un moyen d'écoulement (15) du liquide permettant au liquide de s'écouler depuis le caisson (4) pour le passage du gaz vers le système de distribution secondaire (7). Ce moyen d'écoulement du liquide (15) est inséré dans le caisson (4) pour le passage du gaz et dépasse dans le système de distribution secondaire (7). Avantageusement, ce moyen d'écoulement du liquide (15) est formé par une plaque recouvrant la paroi comprenant les orifices latéraux du caisson (4), le liquide s'écoule donc entre la plaque et le caisson (4) pour le passage du gaz et rejoint l'intérieur du système de distribution secondaire (7).

## Revendications

1. Plateau distributeur (2) pour colonne (1) d'échange de chaleur et/ou de matière entre un gaz (G) et un liquide (L) comportant :
- au moins un caisson (4) en saillie sur la partie supérieure dudit plateau (2) pour le passage dudit gaz à travers ledit plateau,
- au moins un moyen (6) pour le passage dudit liquide à travers ledit plateau (2),
- au moins un système de distribution secondaire (7) en saillie sur la partie inférieure dudit plateau (2) pour distribuer ledit liquide provenant dudit moyen pour le passage du liquide),
ledit système de distribution secondaire est formé par plusieurs caissons perforés (7), chaque caisson ayant sensiblement une forme de rigole,
ledit moyen pour le passage du liquide comprenant au moins une cheminée (6) en saillie sur ladite partie supérieure dudit plateau (2), la cheminée (6) comportant au moins un orifice radial (9) pour l'entrée du liquide et une ouverture pour déverser ledit liquide sur ledit caisson perforé (7), lesdits caissons perforés (7) étant disposés en vis-à-vis desdites cheminées (6) et n'étant pas disposés en vis-à-vis des caissons (4) pour le passage du gaz.

2. Plateau selon la revendication 1, dans lequel ledit caisson perforé (7) comprend plusieurs perforations (8).

3. Plateau selon l'une des revendications précédentes, dans lequel ledit caisson perforé (7) a une section transversale et une section longitudinale de forme respective sensiblement trapézoïdale ou rectangulaire, le côté le plus long desdites sections étant situé du côté du plateau (2).

4. Plateau selon l'une des revendications précédentes, dans lequel ledit caisson perforé (7) comporte des tubes (11) pour le passage du liquide.

5. Plateau selon la revendication 4, dans lequel au moins une partie desdits tubes (11) est en saillie à l'intérieur dudit caisson perforé (7).

6. Plateau selon l'une des revendications 4 ou 5, dans lequel au moins une partie desdits tubes (11) est en saillie à l'extérieur dudit caisson perforé (7).

7. Plateau selon la revendication 6, dans lequel au moins une partie desdits tubes (11) en saillie à l'extérieur dudit caisson perforé (1) est inclinée.

8. Plateau selon l'une des revendications 6 ou 7, dans lequel au moins une partie desdits tubes (11) en saillie à l'extérieur dudit caisson perforé (7) possède une extrémité biseautée.

9. Plateau selon l'une des revendications précédentes, dans lequel ledit caisson (4) pour le passage du gaz est sensiblement parallélépipédique.

10. Plateau selon l'une des revendications précédentes, dans lequel ledit plateau comporte plusieurs caissons (4) pour le passage du gaz, lesdits caissons (4) pour le passage du gaz étant parallèles entre eux.

11. Plateau selon l'une des revendications précédentes, dans lequel ladite cheminée comporte au moins deux orifices radiaux (9) disposées à des hauteurs différentes par rapport à la surface supérieure dudit plateau.

12. Colonne (1) d'échange de chaleur et/ou de matière entre un gaz et un liquide, dans laquelle les deux fluides sont mis en contact au moyen d'un contacteur (3), **caractérisé en ce que** ladite colonne comporte au moins un plateau distributeur (2) selon l'une des revendications précédentes pour permettre la distribution des fluides sur ledit contacteur (3).

13. Colonne selon la revendication 12, dans lequel ladite colonne comporte en outre au moins un répartiteur (12) disposé au dessus d'un plateau distributeur (2) pour la répartition du liquide sur le plateau distributeur (2), ledit répartiteur (12) étant perforé pour le passage dudit liquide et comprenant au moins une perforation surélevée (14) pour le passage dudit fluide.

14. Utilisation d'une colonne (1) selon l'une des revendications 12 ou 13 pour un procédé de traitement de gaz, de captage de CO₂, de distillation ou de transformation d'air.

## Patentansprüche

1. Verteilerboden (2) für eine Kolonne (1) für den Wärme- und/oder Stoffaustausch zwischen einem Gas (G) und einer Flüssigkeit (L), aufweisend:
- mindestens einen über den oberen Teil des Bodens (2) überstehenden Kasten (4) für den Durchtritt des Gases durch den Boden hindurch,
- mindestens ein Mittel (6) für den Durchtritt der Flüssigkeit durch den Boden (2) hindurch,
- mindestens ein sekundäres Verteilungssystem (7), das über den unteren Teil des Bodens (2) übersteht, um die von dem Mittel für den Durchtritt der Flüssigkeit kommende Flüssigkeit zu verteilen,
wobei das sekundäre Verteilungssystem durch mehrere gelochte Kästen (7) gebildet wird, wobei jeder Kasten im Wesentlichen eine Rinnenform hat,
wobei das Mittel für den Durchtritt der Flüssigkeit mindestens einen über den oberen Teil des Bodens (2) überstehenden Kamin (6) umfasst, wobei der Kamin (6) mindestens eine radiale Öffnung (9) für den Eintritt der Flüssigkeit und eine Öffnung zum Entleeren der Flüssigkeit auf den gelochten Kasten (7) beinhaltet,
wobei die gelochten Kästen (7) gegenüber den Kaminen (6) angeordnet sind und nicht gegenüber den Kästen (4) für den Durchtritt des Gases angeordnet sind.

2. Boden nach Anspruch 1, wobei der gelochte Kasten (7) mehrere Lochungen (8) umfasst.

3. Boden nach einem der vorhergehenden Ansprüche, wobei der gelochte Kasten (7) einen im Wesentlichen trapezförmigen oder rechteckigen Querschnitt und Längsschnitt hat, wobei die längste Seite der Schnitte auf der Seite des Bodens (2) gelegen ist.

4. Boden nach einem der vorhergehenden Ansprüche, wobei der gelochte Kasten (7) Rohre (11) für den Durchtritt der Flüssigkeit aufweist.

5. Boden nach Anspruch 4, wobei mindestens ein Teil der Rohre (11) im Innern des gelochten Kastens (7) übersteht.

6. Boden nach einem der Ansprüche 4 oder 5, wobei mindestens ein Teil der Rohre (11) auf der Außenseite des gelochten Kastens (7) übersteht.

7. Boden nach Anspruch 6, wobei mindestens ein Teil der Rohre (11), die auf der Außenseite des gelochten Kastens (1) überstehen, geneigt ist.

8. Boden nach einem der Ansprüche 6 oder 7, wobei mindestens ein Teil der Rohre (11), die auf der Außenseite des gelochten Kastens (7) überstehen, ein abgeschrägtes Ende besitzt.

9. Boden nach einem der vorhergehenden Ansprüche, wobei der Kasten (4) für den Durchtritt des Gases im Wesentlichen quaderförmig ist.

10. Boden nach einem der vorhergehenden Ansprüche, wobei der Boden mehrere Kästen (4) für den Durchtritt des Gases aufweist, wobei die Kästen (4) für den Durchtritt des Gases zueinander parallel sind.

11. Boden nach einem der vorhergehenden Ansprüche, wobei der Kamin mindestens zwei radiale Öffnungen (9) aufweist, die in unterschiedlichen Höhen in Bezug auf die obere Fläche des Bodens angeordnet sind.

12. Kolonne (1) für den Wärme- und/oder Stoffaustausch zwischen einem Gas und einer Flüssigkeit, in der zwei Fluide mittels eines Kontaktors (3) in Kontakt gebracht werden, **dadurch gekennzeichnet, dass** die Kolonne mindestens einen Verteilerboden (2) nach einem der vorhergehenden Ansprüche aufweist, um das Verteilen der Fluide auf dem Kontaktor (3) zu ermöglichen.

13. Kolonne nach Anspruch 12, wobei die Kolonne ferner mindestens einen oberhalb eines Verteilerbodens (2) angeordneten Verteiler (12) zum Verteilen der Flüssigkeit auf dem Verteilerboden (2) aufweist, wobei der Verteiler (12) für den Durchtritt der Flüssigkeit gelocht ist und mindestens eine überhöhte (14) Lochung für den Durchtritt der Flüssigkeit umfasst.

14. Verwendung einer Kolonne (1) nach einem der Ansprüche 12 oder 13 bei einem Verfahren zur Aufbereitung von Gas, zur Abscheidung von CO₂, zur Destillation oder zur Luftumwandlung.

## Claims

1. Distributor tray (2) for a column (1) intended for heat and/or material exchange between a gas (G) and a liquid (L), comprising
- at least one casing (4) projecting from the upper part of said tray (2) for the passage of said gas through said tray,
- at least one means (6) for the passage of said liquid through said tray (2),
- at least one secondary distribution system (7) projecting from the lower part of said tray (2) for distributing said liquid coming from said liquid passage means,
said secondary distribution system being formed by several perforated casings (7), each casing having substantially the shape of a trough,
said liquid passage means comprising at least one chimney (6) projecting from said upper part of said tray (2), the chimney (6) having at least one radial orifice (9) for inflow of the liquid and an opening for discharging said liquid onto said perforated casing (7),
said perforated casings (7) being disposed opposite said chimneys (6) and not being disposed opposite the gas passage casings (4).

2. Tray according to Claim 1, wherein said perforated casing (7) comprises several perforations (8).

3. Tray according to either of the preceding claims, wherein said perforated casing (7) has a cross section and a longitudinal section of substantially trapezoidal or rectangular shape, respectively, the longest side of said sections being on the side of tray (2).

4. Tray according to one of the preceding claims, wherein said perforated casing (7) comprises tubes (11) for the passage of the liquid.

5. Tray according to Claim 4, wherein at least part of said tubes (11) projects inside said perforated casing (7).

6. Tray according to either of Claims 4 and 5, wherein at least part of said tubes (11) projects outside said perforated casing (7).

7. Tray according to Claim 6, wherein at least part of said tubes (11) projecting outside said perforated casing (1) is inclined.

8. Tray according to either of Claims 6 and 7, wherein at least part of said tubes (11) projecting outside said perforated casing (7) has a bevelled end.

9. Tray according to one of the preceding claims, wherein said gas passage casing (4) is substantially parallelepipedal.

10. Tray according to one of the preceding claims, wherein said tray comprises several gas passage casings (4), said gas passage casings (4) being parallel to one another.

11. Tray according to one of the preceding claims, wherein said chimney comprises at least two radial orifices (9) arranged at different heights with respect to the upper surface of said tray.

12. Column (1) for heat and/or material exchange between a gas and a liquid, wherein the two fluids are brought into contact by means of a contactor (3), **characterized in that** said column comprises at least one distributor tray (2) according to one of the preceding claims allowing distribution of the fluids onto said contactor (3).

13. Column according to Claim 12, wherein said column also comprises at least one divider (12) arranged above a distributor tray (2) for distribution of the liquid over the distributor tray (2), said divider (12) being perforated for the passage of said liquid and comprising at least one raised perforation (14) for the passage of said fluid.

14. Use of a column (1) according to either of Claims 12 and 13 for a gas treatment, CO2 capture, distillation or air conversion method.
